# EUROPEAN PATENT SPECIFICATION

(11) **EP 3 096 630 B1**
(45) Date of publication and mention of the grant of the patent: **03.01.2018**
(21) Application number: 15708283.5
(22) Date of filing: 23.01.2015
(51) Int. Cl.: A23G 3/02, A23G 3/34, A23G 7/02

(54) **INSTALLATION FOR THE PRODUCTION OF CONFECTIONERY PRODUCTS, SUCH AS SWEETS AND THE LIKE**
ANLAGE ZUR HERSTELLUNG VON KONFEKTPRODUKTEN, WIE SÜSSWAREN ODER DERGLEICHEN
INSTALLATION POUR LA PRODUCTION DE PRODUITS DE CONFISERIE, TELS QUE DES BONBONS ET SIMILAIRES

(30) Priority: 24.01.2014 IT TO20140055
(43) Date of publication of application: 30.11.2016
(73) Proprietor: Confitech S.r.l., 10090 Bruino (Torino) (IT)
(72) Inventor: RUFFINATTI, Giovanni, I-10094 GIAVENO (Torino) (IT)
(74) Representative: Quinterno, Giuseppe
(86) International application number: PCT/IB2015/050518
(87) International publication number: WO 2015/110997

(56) References cited:
- WO-A2-02/37979
- GB-A- 734 242
- GB-A- 1 305 520
- US-A- 3 202 084

## Description

This invention relates to an installation for the production of confectionery products, particularly sweets and the like.
More specifically the invention relates to an installation for the production of expanded confectionery products.
WO 02/37979 A2 discloses a system for the production of confectionery products comprising a vacuum expansion chamber having a first air-lock inlet provided with valves for receiving a flow of expandable confectionery semi-finished pieces ("pips") containing water in an amount sufficient to expand under vacuum, and an air-lock outlet, in said chamber the flow of pips being conveyed through the chamber by means of mesh conveyor belts for a period of time sufficient to allow expansion of the pips.
One object of this invention is to provide such an installation which is of limited size, has a relatively simple structure and above all has very high productivity.
This and other objects will be accomplished according to the invention through an installation comprising
a vacuum expansion chamber having an inlet provided with a first gas-tight valve device for receiving a flow of semi-finished pieces prepared from a confectionery compound and including particles such as air bubbles and/or powders capable of causing expansion thereof under vacuum, and an outlet; in the said chamber there being provided a rotatable drum having a grille structure having openings or a mesh of dimensions smaller than that of the semi-finished pieces and intended to receive and transfer to the outlet of the said chamber a flow of said semi-finished pieces in a controlled period of time sufficient to allow expansion thereof under vacuum;
a cooling and conveying apparatus under vacuum at a controlled temperature, having an inlet connected to the outlet of the expansion chamber and an outlet having an associated second gas-tight valve device for discharging the confectionery products; the said installation including at least one cooling and conveying unit comprising a conduit under vacuum in which there is provided a worm conveyor device including a flexible spiral screw intended to cause the expanded pieces to move at a controlled speed, the conduit being provided with liquid-refrigerated cooling means intended to bring about progressive solidification of the said expanded pieces at a controlled temperature;
and wherein the rotatable drum is provided with a plurality of receiving and conveying elements intended to transfer a flow of semi-finished pieces from the inlet to the outlet of said chamber, said conveying elements being attached to the inner cylindrical surface of the drum and being shaped in the form of curved tiles with their corresponding concavities oriented in the same direction relative to the circumferential direction and being inclined relative to the axis of said drum.

Further features and advantages of the invention will be apparent from the following detailed description provided purely by way of a non-limiting example with reference to the appended drawings in which:
Figure 1 is a diagrammatical illustration in side view, in partial cross-section, of an installation for the production of expanded confectionery products according to this invention;
Figure 2 is a partial cross-sectional view along the line II-II in Figure 1; and
Figure 3 is a partial perspective view showing a portion of a spiral-shaped screw of a known conveyor device incorporated in an installation according to this invention.

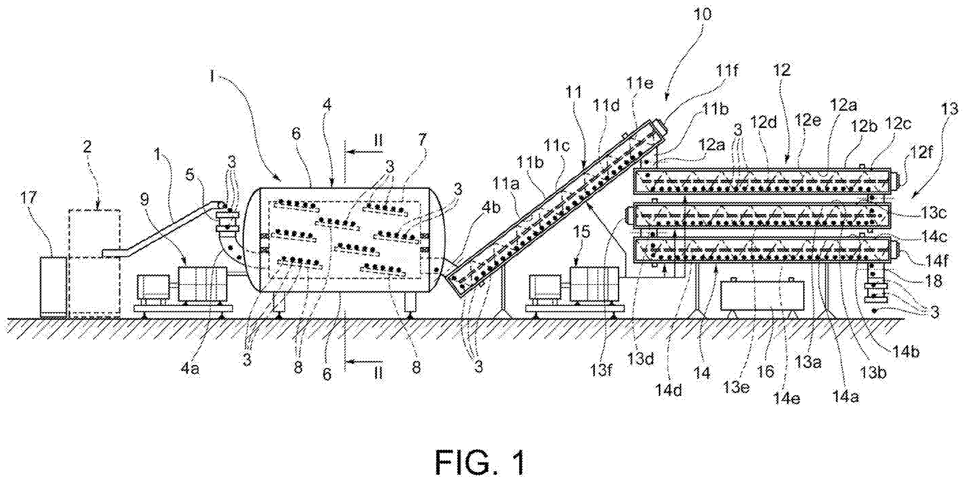

In Figure 1 I indicates as a whole an installation for the production of confectionery products which are expanded and solidified under vacuum in accordance with this invention.
In the embodiment illustrated a conveyor belt 1 intended to receive a flow of semi-finished pieces or pips 3, for example from a forming machine 2 of a type which is in itself known and does not form part of the invention, and which is capable of producing the semi-finished pieces from a confectionery compound in the plastic state, is associated with installation I.
The semi-finished pieces or pips 3 include particles, in particular air bubbles and/or powders which are capable of altering their specific gravity and giving rise to an expansion of their volume under vacuum.
The confectionery compound may be based on sugars or substitutes, and may comprise milk powder, structuring substances, flavourings, etc.
When in operation the outlet from conveyor belt 1 delivers a flow of semi-finished or preformed pieces 3 towards the inlet 4a of a vacuum expansion chamber indicated as a whole by 4. This inlet 4a of chamber 4 is associated with a gas-tight inlet valve device, indicated by 5, of a type which is in itself known.
Expansion chamber 4 essentially comprises a substantially cylindrical outer enclosure 6 within which there is rotatably mounted a rotating drum 7 having a grille structure, having openings or a mesh of dimensions smaller than that of semi-finished pieces 3.

When in operation, a motor which cannot be seen in the drawings causes drum 7 to rotate about its own axis, which in the embodiment illustrated extends horizontally, but which may also be inclined in other embodiments.
A plurality of receiving and conveying elements indicated by 8 is attached to the inner cylindrical surface of drum 7. These elements are shaped in the form of tiles, with their corresponding concavities orientated in the same direction relative to the circumferential direction.
Their arrangement is such that rotation of drum 7 in a predetermined direction will give rise to a quantity of semi-finished pieces 3 delivered to expansion chamber 4 via valve device 5 being picked up by elements 8.
As illustrated in Figure 1, tile elements 8 are uniformly inclined in relation to the generatrices of the cylindrical surface of rotating drum 7 so that rotation of drum 7 in a predetermined direction will cause progressive advancement of semi-finished pieces 3 towards the outlet 4b of expansion chamber 4 by means of such tile members 8.
The arrangement is conveniently such so that semi-finished pieces 3 are transferred from inlet 4a to outlet 4b of expansion chamber 4 over a predetermined time, for example ' approximately one minute, sufficient to allow them to complete their expansion through the effect of the vacuum obtaining in chamber 4.
A vacuum generator 9, of a type which is in itself known (Figure 1), is in fact attached to expansion chamber 4.
Outlet 4b from expansion chamber 4 is connected to the inlet of a vacuum and conveying apparatus indicated as a whole by 10 in Figure 1.
In the embodiment illustrated by way of example, cooling and conveying apparatus 10 comprises a first unit 11 having an inlet 11a attached to outlet 4b of expansion chamber 4 and an outlet 11b attached to the inlet to a modular unit 12 belonging to a group of three modular units. In addition to unit 12 this group comprises a further two similar units indicated by 13 and 14 in Figure 1.

Units from 11 to 14 are connected in cascade, and each comprise a corresponding conduit 11a-14a, which is for example cylindrical, having its outlet connected to the inlet of the subsequent unit.

Conduits 11a-14a and their corresponding interconnections are kept under vacuum through a vacuum generating unit 15.

In the embodiment illustrated each conduit 11a-14a is surrounded by an outer enclosure 11b-14b which forms a jacket 11c-14c around the conduit and within which a cooling flow originating from a cooling unit 16 is caused to flow when in operation.

Within each unit 11-14 there is provided a corresponding worm transport device including a rotor comprising a longitudinal shaft 11d-14d provided with a plurality of bristles, for example of a synthetic material such as a polyamide, which extend radially, together forming a kind of spiral-shaped blade 11e-14e.

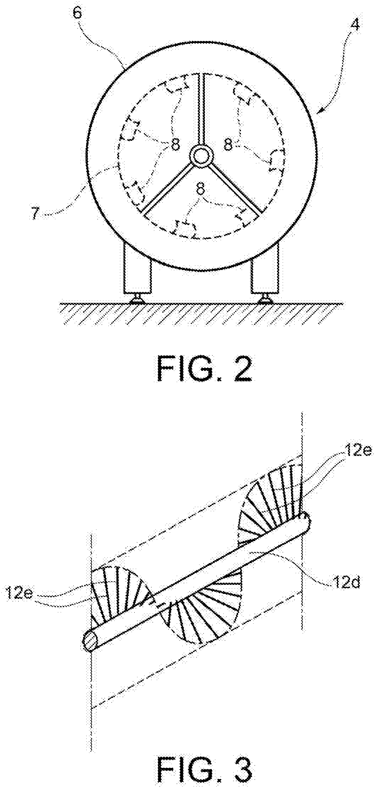

A portion of the spiral-shaped rotor in modular unit 12 is illustrated by way of example in Figure 3.

As an alternative the rotor may comprise a flexible spiral-shaped blade of for example a synthetic material, for example a silicone.

When in operation, shafts 11d-14d of units 11-14 are driven in rotation by means of corresponding motor-gearbox units 11f-14f.

In the embodiment illustrated in Figure 1, cooling and conveyor unit 11 is structurally slightly different from modular units 12-14, which are instead essentially identical to each other.

However, with slight modifications to the interconnections unit 11 may also be morphologically identical to each of modular units 12-14.

Installations in which cooling and conveyor apparatus 10 comprises a single unit of the types described above, according to need, or a number of units greater than that illustrated in the drawings, nevertheless fall within the scope of the invention.

With reference to the drawings, the connections between individual units 11-14 are preferably of an articulated type, as a result of which for example all modular units 12-14 may together be orientated in the manner illustrated in Figure 1, or may be arranged in an orientation at 90° with respect to the plane in that figure.

Installation 1 also conveniently comprises an electronic control unit 17 designed to coordinate the functioning of the various machines and constituent units in predetermined ways. This unit 17 may among other things control conveyor belt 1, the rotation of drum 7 in vacuum expansion chamber 4, the switching on of the motor/gearbox devices for cooling and conveying units 11-14 and the refrigerating fluid generating unit 16 connected to those units.

Various sensors such as temperature sensors associated with expansion chamber 4 and cooling and conveying units 11-14 are also connected to control unit 17 in a manner which is not shown.

In the embodiment illustrated a gas-tight valve device 18, of a type which is in itself known, which is capable of allowing expanded pieces 3 to be discharged into chamber 4 and solidified during passage through cooling and conveying apparatus 10, is attached to the outlet of terminal cooling and conveying unit 14.

The installation according to this invention has a relatively simple structure, is quite reliable in operation and has a layout of extremely small size.

The cooling and conveying apparatus in such an installation can also be readily configured according to the space available at the site where it is used.

## Claims

1. Installation (1) for the production of confectionery products, such as sweets and the like, comprising
a vacuum expansion chamber (4), having an inlet (4a) provided with a first gas-tight valve device (5) for receiving a flow of semi-finished pieces (3) prepared starting from a confectionery compound and including particles, such as air bubbles and/or powders, capable of causing an expansion thereof under vacuum, and an outlet (4b); in said chamber (4) there being provided a rotatable drum (7) having a grille structure having openings or a mesh of dimensions smaller than that of the semi-finished pieces (3) and intended to
receive and transfer to the outlet (4b) of said chamber (4) a flow of said semi-finished pieces (3), in a controlled period of time sufficient to allow an expansion thereof under vacuum;
a cooling and conveying apparatus (10) under vacuum, at a controlled temperature, having an inlet coupled with the outlet of the expansion chamber (4), and an outlet having an associated second gas-tight valve device (18) for discharging the expanded and cooled confectionery products (3); said apparatus (10) including at least one cooling and conveying unit (11-14) comprising a conduit under vacuum (11a-14a) in which there is provided a worm conveyor device (11d-14d; 11e-14e) including a flexible spiral screw (11e-14e) intended to cause a displacement of the expanded pieces (3) at a controlled speed; the conduit (11a-14a) being provided with liquid-refrigerated cooling means(16) intended to cause a progressive solidification of said expanded pieces (3) at a controlled temperature;
and wherein the rotatable drum (7) is provided with a plurality of receiving and conveying elements (8) intended to transfer a flow of semi-finished pieces (3) from the inlet (4a) to the outlet (4b) of said chamber (4), said conveying elements (8) being attached to the inner cylindrical surface of the drum (7) and being shaped in the form of curved tiles with their corresponding concavities oriented in the same direction relative to the circumferential direction and being inclined relative to the axis of said drum (7).

2. Installation according to claim 1, wherein the cooling and conveying apparatus (10) comprises a plurality of cascaded cooling and conveying modular units (12-14), coupled with one another preferably in an articulated manner.

3. Installation according to any one of the preceding claims, wherein the screw of the worm conveyor of said at least one unit (11-14) is of the type provided with bristles.

4. Installation according to any one of claims 1 to 3 wherein the screw of the worm conveying device of said at least one unit (11-14) is of the kind comprising a flexible blade.

5. Installation according to any one of the preceding claims, wherein the conduit (11a-14a) of the or each unit (11-14) of the cooling and conveying apparatus (10) is provided with an external jacket (11c-14c) for the circulation of a refrigerant liquid.

## Patentansprüche

1. Einrichtung (1) für die Herstellung von Süßwarenprodukten, wie beispielsweise Süßigkeiten und Ähnliches, mit
einer Vakuumausdehnkammer (4), die einen Einlass (4a), der mit einer ersten gasdichten Ventileinrichtung (5) zum Aufnehmen eines Stroms von halbfertigen Teilen (3) versehen ist, die zuerst aus einer Süßwarenmasse zubereitet werden und Partikel enthalten, wie beispielsweise Luftblasen und/oder Pulver, die geeignet sind, eine Ausdehnung davon unter Vakuum zu bewirken, und einen Auslass (4b) aufweist; wobei in der Kammer (4) ein drehbarer Behälter (7) vorgesehen ist, der eine Gitterstruktur aufweist, die die Öffnungen oder ein Netz mit Abmaßen aufweist, die kleiner als die der halbfertigen Teile (3) sind, und der angedacht ist, dass er einen Strom von halbfertigen Teilen (3) in einer gesteuerten Zeitspanne, die ausreichend ist, dass sie eine Ausdehnung davon unter Vakuum ermöglicht, aufnimmt und zu dem Auslass (4b) der Kammer (4) weiterleitet;
einer Vakuum-Kühl- und Fördervorrichtung (10) mit einer gesteuerten Temperatur, die einen Einlass, der mit dem Auslass der Ausdehnkammer (4) gekoppelt ist, und einen Auslass aufweist, der eine zugeordnete zweite gasdichte Ventileinrichtung (18) zum Abführen des ausgedehnten und abgekühlten Süßwarenprodukts (3) aufweist; wobei die Vorrichtung (10) wenigstens eine Kühl- und Fördereinheit (11-14) aufweist, die ein Vakuum-Rohr (11a-14a) aufweist, in dem eine Schneckenfördereinrichtung (11d-14d; 11e-14e) vorgesehen ist, die eine flexible Spiralschraube (11e-14e) aufweist, die angedacht ist, dass sie eine Verschiebung der ausgedehnten Teile (3) mit einer gesteuerten Geschwindigkeit verursacht; wobei das Rohr (11a-14a) mit einem flüssiggekühlten Kühlmittel (16) versehen ist, das angedacht ist, dass es eine fortschreitende Erstarrung der ausgedehnten Teile (3) bei einer gesteuerten Temperatur bewirkt; und bei der der drehbare Behälter (7) mit einer Vielzahl von Aufnahme- und Förderelementen (8) versehen ist, die angedacht sind, dass sie einen Strom von halbfertigen Teilen (3) von dem Einlass (4a) zu dem Auslass (4b) der Kammer (4) weiterleiten, wobei die Förderelemente (8) an der inneren zylindrischen Fläche des Behälters (7) angebracht sind und in der Form von gebogenen Fliesen geformt sind, wobei ihre entsprechenden Höhlungen in dieselbe Richtung relativ zu der Umfangsrichtung ausgerichtet sind, und relativ zu der Achse des Behälters (7) geneigt sind.

2. Einrichtung nach Anspruch 1, bei der die Kühl- und Fördervorrichtung (10) eine Vielzahl von stufenförmigen Kühl- und Fördermoduleinheiten (12-14) aufweist, die miteinander bevorzugt auf eine gelenkige Art und Weise verbunden sind.

3. Einrichtung nach einem der vorhergehenden Ansprüche, bei der die Schraube des Schneckenförderers der wenigstens einen Einheit (11-14) von einem Typ ist, der mit Borsten versehen ist.

4. Einrichtung nach einem der Ansprüche 1 bis 3, bei der die Schraube der Schneckenfördereinrichtung der wenigstens einen Einheit (11-14) von der Art ist, die eine flexible Schaufel aufweist.

5. Einrichtung nach einem der vorhergehenden Ansprüche, bei der das Rohr (11a-14a) der oder jeder Einheit (11-14) der Kühl- und Fördervorrichtung (10) mit einer äußeren Ummantelung (11c-14c) für die Zirkulation einer Kühlmittelflüssigkeit versehen ist.

## Revendications

1. Installation (1) pour la production de produits de confiserie, tels que des bonbons et similaires, comprenant
une chambre d'expansion sous vide (4), ayant une entrée (4a) pourvue d'un premier dispositif de soupape étanche aux gaz (5) pour recevoir un flux de pièces semi-finies (3) préparées à partir d'un composé de confiserie et incluant des particules, telles que des bulles d'air et/ou des poudres, capables d'en provoquer l'expansion sous vide, et une sortie (4b) ; un tambour rotatif (7) étant prévu dans ladite chambre (4), le tambour rotatif (7) ayant une structure de grille comportant des ouvertures ou une maille de dimensions plus petites que celles des pièces semi-finies (3) et destinées à recevoir et transférer vers la sortie (4b) de ladite chambre (4) un flux desdites pièces semi-finies (3), en une période temporelle contrôlée suffisante pour en permettre l'expansion sous vide ;
un appareil de refroidissement et d'acheminement (10) sous vide, à une température contrôlée, ayant une entrée couplée à la sortie de la chambre d'expansion (4), et une sortie ayant un second dispositif de soupape étanche aux gaz (18) associé, pour évacuer les produits de confiserie (3) expansés et refroidis ; ledit appareil (10) incluant au moins une unité de refroidissement et d'acheminement (11-14) comprenant un conduit sous vide (11a-14a) dans lequel est prévu un dispositif de cheminement à vis sans fin (11d-14d ; 11e-14e) incluant une vis spiralée flexible (11e-14e) destinée à provoquer un déplacement des pièces (3) expansées à une vitesse contrôlée ; le conduit (11a-14a) étant pourvu d'un moyen de refroidissement réfrigéré par liquide (16) destiné à provoquer une solidification progressive desdites pièces (3) expansées, à une température contrôlée ;
et dans laquelle le tambour rotatif (7) est pourvu d'une pluralité d'éléments de réception et d'acheminement (8) destinés à transférer un flux de pièces semi-finies (3) de l'entrée (4a) à la sortie (4b) de ladite chambre (4), lesdits éléments d'acheminement (8) étant fixés à la surface cylindrique interne du tambour (7) et étant conformés sous la forme de dalles incurvées avec leurs concavités correspondantes orientées dans la même direction que la direction circonférentielle et étant inclinés par rapport à l'axe dudit tambour (7).

2. Installation selon la revendication 1, dans laquelle l'appareil de refroidissement et d'acheminement (10) comprend une pluralité d'unités modulaires de refroidissement et d'acheminement (12-14) disposées en cascade, couplées les unes aux autres de préférence de manière articulée.

3. Installation selon l'une quelconque des revendications précédentes, dans laquelle la vis du dispositif de cheminement à vis sans fin de ladite au moins une unité (11-14) est du type pourvue de brins.

4. Installation selon l'une quelconque des revendications 1 à 3, dans laquelle la vis du dispositif d'acheminement à vis sans fin de ladite au moins une unité (11-14) est du type comprenant une pale flexible.

5. Installation selon l'une quelconque des revendications précédentes, dans laquelle le conduit (11a-14a) de la ou de chaque unité (11-14) de l'appareil de refroidissement et d'acheminement (10) est pourvu d'une chemise externe (11c-14c) pour la circulation d'un liquide réfrigérant.
